# EUROPÄISCHE PATENTSCHRIFT

(11) **EP 2 089 870 B1**
(45) Veröffentlichungstag und Bekanntmachung des Hinweises auf die Patenterteilung: **23.12.2009**
(21) Anmeldenummer: 07821191.9
(22) Anmeldetag: 11.10.2007
(51) Int. Cl.: G08G 1/09

(54) **VERFAHREN ZUM BETRIEB EINES FAHRERINFORMATIONSSYSTEMS, FAHRERINFORMATIONSSYSTEM UND DATENTRÄGER**
METHOD FOR OPERATING A DRIVER INFORMATION SYSTEM, DRIVER INFORMATION SYSTEM AND DATA CARRIER
PROCÉDÉ D'UTILISATION D'UN SYSTÈME D'INFORMATION DU CONDUCTEUR, SYSTÈME D'INFORMATION DU CONDUCTEUR ET SUPPORT DE DONNÉES

(30) Priorität: 05.12.2006 DE 102006057285
(43) Veröffentlichungstag der Anmeldung: 19.08.2009
(73) Patentinhaber: Robert Bosch GmbH, 70442 Stuttgart (DE)
(72) Erfinder: OTTE, Dirk, 30880 Laatzen (DE)
(86) Internationale Anmeldenummer: PCT/EP2007/060824
(87) Internationale Veröffentlichungsnummer: WO 2008/068086

(56) Entgegenhaltungen:
- EP-A- 1 560 187
- DE-A1- 19 831 099
- DE-A1- 19 837 617

## Beschreibung

### Technisches Gebiet

Die Erfindung betrifft ein Fahrerinformationssystem, wie beispielsweise ein Navigationssystem und ein Verfahren zum Betrieb eines Fahrerinformationssystems, bei welchem Karten, vorzugsweise digitale Karten, verwendet werden sowie ein Datenträger mit einer digitalen Karte.

### Stand der Technik

Bei Fahrerinformationssystemen, wie beispielsweise Navigationssystemen für Kraftfahrzeuge, werden digitale Karten verwendet, beispielsweise um eine Karte oder eine Umgebung auf einem Display darzustellen oder um Ziele einzugeben oder um mittels einer Zielführung den Fahrer des Fahrzeuges zu einem zuvor definierten Ziel durch ausgegebene Fahranweisungen zu führen. Die verwendeten digitalen Karten weisen dabei beispielsweise Straßen auf, die durch sogenannte Kanten repräsentiert werden. Solche Kanten bestehen vorzugsweise aus einem Linienelement oder einer Mehrzahl von Linienelementen, die beispielsweise geradlinig sein können, wodurch der Verlauf einer Kante dem tatsächlichen Verlauf der Straße angenähert wird. Treffen sich Kanten an einer Kreuzung oder einer Abzweigung, so werden diese Punkte des Zusammentreffens durch Knoten repräsentiert. Ein Netz von Kanten und Knoten beschreibt somit beispielsweise das Straßennetz. Darüber hinaus verfügen die Karten über Zusatzinformationen, wie über spezielle Punkte des Interesses, wie Restaurants, Hotels oder Tankstellen etc.

Auch ist in solchen digitalen Karten die relevante Oberfläche der Erde oder eines diesbezüglichen Ausschnitts mit Umgebungsdaten, wie Flüsse, Seen oder Meere enthalten.

Üblicher Weise sind die verwendeten digitalen Karten in sogenannte Flächenbereiche, die auch Kacheln genannt werden, aufgeteilt, so dass lediglich diejenigen Daten von Flächenbereichen oder Kacheln von einem Datenträger in einen Arbeitsspeicher des Fahrerinformationssystems geladen werden müssen, die für den beabsichtigten, verwendeten oder benötigten Kartenausschnitt benötigt werden. Dadurch kann erreicht werden, dass nicht die gesamten Kartendaten in den Arbeitsspeicher geladen werden müssen.

Allerdings ist es nachteilig, dass jede Kachel mit ihren Datensätzen auf dem Datenträger abgelegt ist und in den Arbeitsspeicher geladen wird, auch wenn sie mit Datensätzen anderer Kacheln identisch sind. Dadurch wird ein erhöhter Speicherbedarf auf dem Datenträger verursacht und die Ladezeit zum Laden in den Arbeitsspeicher erhöht sich dadurch und der benötigte Arbeitsspeicher des Fahrerinformationssystems muss eine erhöhte Speicherkapazität aufweisen.
Ein solches Verfahren ist z.B. aus der EP-A-1 560 187 bekannt. Dort werden gleiche Namen zu Straßen, die in 2 Kachel existieren, nur einmal gespeichert.

### Darstellung der Erfindung, Aufgabe, Lösung,Vorteile

Aufgabe der Erfindung ist es, ein Verfahren zum Betrieb eines Fahrerinformationssystems, ein solches Fahrerinformationssystem und einen Datenträger mit Daten einer digitalen Karte zu schaffen, welche einen geringeren Speicherbedarf benötigt und bei der Ladezeit gegebenenfalls Vorteile aufweist.

Erfindungsgemäß wird die Aufgabe bezüglich des Verfahrens gelöst mit den Merkmalen von Anspruch 1.

Danach betrifft die Erfindung ein Verfahren zum Betrieb eines Fahrerinformationssystems mit einem Arbeitsspeicher, einer Datenträgeraufnahmevorrichtung zur Aufnahme eines Datenträgers, einem Anzeigeelement und zumindest einem Bedienelement, wobei der Datenträger Kartendaten aufweist, welche in Flächenbereiche oder Kacheln unterteilt sind und Daten von unterschiedlichen Kacheln mit gleichem Inhalt auf dem Datenträger nur einfach abgespeichert sind.

Dabei ist es vorteilhaft, wenn der Datenträger eine Liste, Tabelle oder Datei eines Inhaltsverzeichnisses des Datenträgers aufweist, in welcher oder in welchem zu jeder Kachel ein Speicherort der Daten der jeweiligen Kachel auf dem Datenträger zugeordnet ist und Daten von unterschiedlichen Kacheln mit gleichem Inhalt auf einen gleichen Speicherort verweisen.

Bezüglich des Fahrerinformationssystems wird die Aufgabe gelöst mit den Merkmalen von Anspruch 3, wonach das Fahrerinformationssystem einen Arbeitsspeicher, eine Datenträgeraufnahmevorrichtung zur Aufnahme eines Datenträgers, ein Anzeigeelement und zumindest ein Bedienelement umfasst, wobei der Datenträger Kartendaten aufweist, welche in Flächenbereiche oder Kacheln unterteilt sind und Daten von unterschiedlichen Kacheln mit gleichem Inhalt auf dem Datenträger nur einfach abgespeichert sind.

Die Aufgabe bezüglich des Datenträgers wird erreicht mit einem Datenträger mit auf dem Datenträger gespeicherten Kartendaten einer digitalen Karte, wobei die Kartendaten in Flächenbereiche oder Kacheln unterteilt sind, den Kacheln Kartendaten zugeordnet sind,
wobei die den Kacheln zugeordneten Daten von unterschiedlichen Kacheln mit gleichem Inhalt auf dem Datenträger nur einfach abgespeichert sind.

Dabei ist es vorteilhaft, wenn der Datenträger eine CD, CD-ROM, eine DVD, ein Speicherchip oder ein anderweitiges Datenspeichermedium ist.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: schematische Darstellung einer digitalen Karte; und

- Fig. 2: eine schematische Darstellung einer Liste eines Inhaltsverzeichnisses eines Datenträgers; und
- Fig. 3: eine schematische Darstellung eines Fahrerinformationssystems.

### Bevorzugte Ausführung der Erfindung

Fahrerinfonnationssysteme, wie auch Navigationssysteme, verwenden beispielsweise digitale Karten zur Darstellung der Umgebung, zur Berechnung von Routen zum Erreichen eines ausgewählten Zielpunkts ausgehend beispielsweise von einem aktuellen Koordinatenpunkt des Fahrzeugs in der Karte. Dazu wird beispielsweise eine Zielkoordinate eingegeben oder definiert und anhand der aktuellen Koordinate bestimmt das Fahrerinformationssystem unter Zuhilfenahme einer verfügbaren beispielsweise digitalen Karte die unter gegebenenfalls angegebenen weiteren Randbedingungen geeignetste Route zur Zielkoordinate. Diese Route kann dann mittels einer Zielführung erreicht werden.

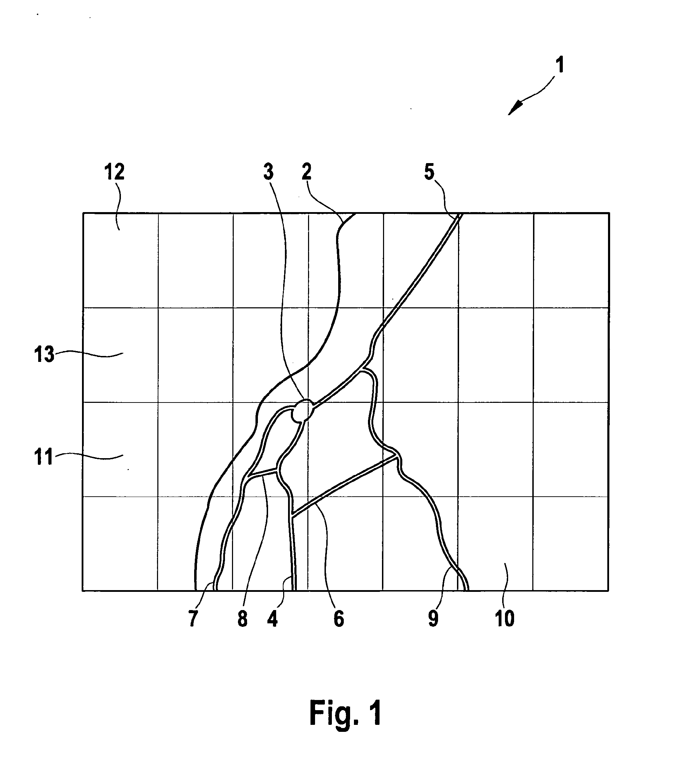

Dazu wird eine digitale Karte 1 verwendet, die mit ihren Daten, wie Kartendaten, auf einem Datenträger gespeichert ist. Die Figur 1 zeigt dabei eine solche digitale Karte 1 bzw. einen Ausschnitt einer Karte, die beispielsweise einen Küstenverlauf 2 mit einer Stadt 3 und Straßen 4,5,6,7,8,9 aufweist. Rechts bzw. östlich des Küstenverlaufes 2 soll Land 10 dargestellt sein und links bzw. westlich des Küstenverlaufes 2 soll dabei ein See 11 oder ein Meer dargestellt sein. Somit gibt die Linie 2 des Küstenverlaufs eine Grenze zwischen Land und Wasser wieder.

Die Karte 1 ist in sogenannte Flächenbereiche 12, wie auch Kacheln genannt, aufgeteilt, wobei die Kacheln mit ihren dieser Kachel zugeordneten Kartendaten auf einem Datenträger gesondert gespeichert sind, so dass lediglich die Kartendaten einer oder einzelner oder mehrerer Kacheln in einem Arbeitsspeicher eines Fahrerinformationssystems ladbar sind. Es ist somit nicht nötig, alle Daten aller Kacheln in den Arbeitsspeicher zu laden, falls diese aktuell nicht benötigt werden. Die Grenzen der Kacheln können dabei durch geradlinige oder auch gekrümmte Grenzlinien gebildet werden, so dass Kacheln beispielsweise recheckige Flächenbereichen der Karte oder anderweitig geformte Flächenbereiche der Karte darstellen. Auch können die Kacheln gleich groß sein und/oder auch mit unterschiedlicher Größe versehen sein. Dabei können in einer Karte auch Kacheln unterschiedlicher Größe verwendet werden. Auch ist es möglich, dass bei unterschiedlicher Darstellung und/oder bei unterschiedlicher Auflösung verschiedene Kachelgrößen verwendbar sind.

Es ist im Beispiel der Figur 1 zu erkennen, dass die Kacheln 12 und 13 identisch sind, weil die beiden Kacheln nur Wasser und kein Land zeigen.

In diesem Fall ist es erfindungsgemäß vorteilhaft, wenn die Daten von Kacheln mit gleichem Inhalt nicht mehrfach auf dem Datenträger abgespeichert werden, sondern dass die abgespeicherten Daten von solchen Kacheln mit gleichem Inhalt nur einmal abgespeichert werden und diese Daten von Kacheln mit gleichem Inhalt den verschiedenen Kacheln in der Karte zugeordnet werden. Dadurch wird auch vorteilhaft erreicht, dass im Falle des Ladens der Daten solcher Kacheln mit identischem Inhalt in den Arbeitsspeicher, diese Daten nur einmal geladen werden.

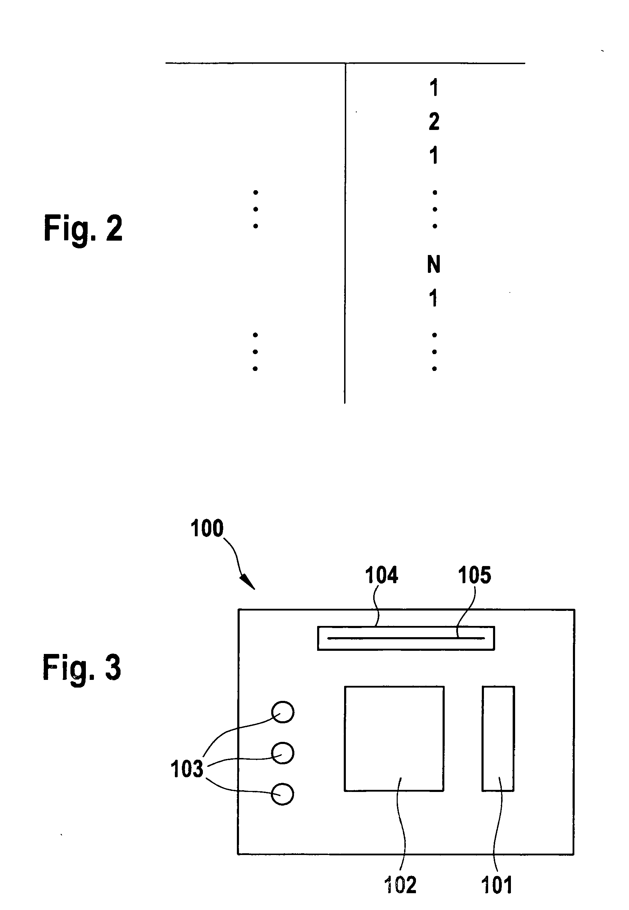

Die Figur 2 zeigt dazu eine Tabelle oder Liste, mit einem Inhaltsverzeichnis für die Kacheln des Datenträgers. Dabei wird jede Kachel in dem Inhaltsverzeichnis aufgeführt und jeder Kachel wird ein Speicherort auf dem Datenträger zugeordnet. Es ist in der Figur 2 zu erkennen, dass der Speicherort 1 mehrfach auftritt, so dass die Kacheln 1, 3 und M identisch sind, da sie dem gleichen Speicherort zugewiesen sind. Soll nun die Kachel M in den Arbeitsspeicher eines Fahrerinformationssystems geladen werden, werden die Daten mit dem Speicherort 1 geladen. Gleiches gilt für Daten der Kachel 1 oder der Kachel 3. Wenn somit bereits eine solche Kachel bzw. die diesbezüglichen Daten geladen wären, würde sich das Laden von Daten einer identischen Kachel bzw. einer Kachel mit identischem Inhalt erübrigen.

Dies bedeutet, dass in dem Inhaltsverzeichnis für jede Kachel eingetragen ist, wo sie auf dem Datenträger abgespeichert ist, wobei für unterschiedliche Kacheln mit identischem Inhalt verschiedene Einträge vorgesehen sind, diese aber auf den gleichen Eintrag für den Speicherort verweisen.

Die Figur 3 zeigt ein Fahrerinformationssystem 100, wie beispielsweise ein Navigationssystem, in schematischer Darstellung mit einem Arbeitsspeicher 101, einem Anzeigeelement 102, wie Display, und zumindest einem Bedienelement 103. Das Navigationssystem 100 vermag Kartendarstellungen auf dem Anzeigeelement 102 darzustellen, wobei beispielsweise berechnete Routen in einer Kartedarstellung anzeigbar sind. Weiterhin verfügt das Navigationssystem 100 über ein Datenträgeraufnahmevorrichtung 104, mittels welcher ein Datenträger 105 vorgesehen oder aufgenommen werden kann, auf welchem digitale Kartendaten gespeichert sind. Ein Fahrerinformationssystem 100 gemäß Figur 3 kann verwendet werden, um oben beschriebene Verfahren durchzuführen

## Patentansprüche

1. Verfahren zum Betrieb eines Fahrerinformationssystems (100) mit einem Arbeitsspeicher (101), einer Datenträgeraufnahmevorrichtung (104) zur Aufnahme eines Datenträgers (105) und mit einem Anzeigeelement (102) und zumindest einem Bedienelement (103), wobei der Datenträger Kartendaten aufweist, welche in Flächenbereiche oder Kacheln unterteilt sind und Daten von unterschiedlichen Kacheln mit gleichem Inhalt auf dem Datenträger nur einfach abgespeichert sind.

2. Verfahren nach Anspruch 1, **dadurch gekennzeichnet, dass** der Datenträger (105) eine Liste eines Inhaltsverzeichnisses aufweist, in welcher zu jeder Kachel ein Speicherort der Daten der jeweiligen Kachel zugeordnet ist und Daten von unterschiedlichen Kacheln mit gleichem Inhalt auf einen Speicherort verweisen.

3. Fahrerinformationssystems (100) mit einem Arbeitsspeicher (101), einer Datenträgeraufnahmevorrichtung (104) zur Aufnahme eines Datenträgers (105) und mit einem Anzeigeelement (102) und zumindest einem Bedienelement (103), wobei der Datenträger Kartendaten aufweist, welche in Flächenbereiche oder Kacheln unterteilt sind und Daten von unterschiedlichen Kacheln mit gleichem Inhalt auf dem Datenträger nur einfach abgespeichert sind, zur Durchführung eines Verfahrens nach zumindest einem der vorhergehenden Ansprüche.

4. Datenträger (105) mit auf dem Datenträger gespeicherten Kartendaten einer digitalen Karte (1), wobei die Kartendaten in Flächenbereiche (12,13) oder Kacheln unterteilt sind, den Kacheln Kartendaten zugeordnet sind, wobei die den Kacheln zugeordneten Daten von unterschiedlichen Kacheln mit gleichem Inhalt auf dem Datenträger nur einfach abgespeichert sind.

5. Datenträger nach Anspruch 4, **dadurch gekennzeichnet, dass** der Datenträger (105) eine DC, eine CD-ROM, eine DVD, ein Speicherchip oder ein anderweitiges Datenspeichermedium ist.

## Claims

1. Method for the operation of a driver information system (100) with a main memory (101), a data storage medium holding apparatus (104) for holding a data storage medium (105) and with a display element (102) and at least one operator control element (103), wherein the data storage medium has map data which are divided into area regions or tiles, and data from different tiles with the same content are stored on the data storage medium only once.

2. Method according to Claim 1, **characterized in that** the data storage medium (105) has a list from a table of contents, in which list each tile has an associated storage location for the data from the respective tile, and data from different tiles with the same content refer to one storage location.

3. Driver information system (100) with a main memory (101), a data storage medium holding apparatus (104) for holding a data storage medium (105) and with a display element (102) and at least one operator control element (103), wherein the data storage medium has map data which are divided into area regions or tiles, and data from different tiles with the same content are stored on the data storage medium only once, for carrying out a method according to at least one of the preceding claims.

4. Data storage medium (105) with map data, stored on the data storage medium, from a digital map (1), wherein the map data are divided into area regions (12, 13) or tiles, the tiles have associated map data, wherein the data associated with the tiles from different tiles with the same content are stored on the data storage medium only once.

5. Data storage medium according to Claim 4,
**characterized in that** the data storage medium (105) is a CD, a CD-ROM, a DVD, a memory chip or another data storage medium.

## Revendications

1. Procédé de conduite d'un système (100) d'information du conducteur, qui présente
une mémoire de travail (101),
un dispositif (104) de réception d'un support de données qui loge un support de données (105),
un élément d'affichage (102) et
au moins un élément de commande (103), et dans lequel
le support de données présente des données cartographiques divisées en zones de surface ou en carreaux,
les données de carreaux différents qui présentent le même contenu ne sont conservées en mémoire qu'une seule fois sur le support de données.

2. Procédé selon la revendication 1, **caractérisé en ce que** le support de données (105) présente une liste de références de contenu dans laquelle l'emplacement de mémoire des données de chaque carreau est associé au carreau concerné et **en ce que** les données de carreaux différents qui présentent le même contenu renvoient à un emplacement de mémoire.

3. Système (100) d'information du conducteur, qui présente
une mémoire de travail (101),
un dispositif (104) de réception d'un support de données qui loge un support de données (105),
un élément d'affichage (102) et
au moins un élément de commande (103),
dans lequel
le support de données présente des données cartographiques qui sont divisées en zones de surface ou en carreaux et
les données de carreaux différents qui présentent le même contenu ne sont conservées en mémoire qu'une seule fois sur le support de données,
en vue de l'exécution d'un procédé selon au moins l'une des revendications précédentes.

4. Support de données (105) sur lequel les données cartographiques d'une carte numérique (1) sont conservées sur le support de données, les données cartographiques étant divisées en zones de surface (12, 13) ou en carreaux, des données cartographiques étant associées aux carreaux, les données associées à des carreaux différents qui présentent le même contenu n'étant conservées en mémoire qu'une seule fois sur le support de données.

5. Support de données selon la revendication 4, **caractérisé en ce que** le support de données (105) est un CD, un CD-ROM, un DVD, une puce de mémoire ou un autre support de mémoire de données.
